# EUROPEAN PATENT SPECIFICATION

(11) **EP 1 567 846 B1**
(45) Date of publication and mention of the grant of the patent: **25.04.2007**
(21) Application number: 03751068.2
(22) Date of filing: 07.10.2003
(51) Int. Cl.: G01N 1/36, B65D 43/16

(54) **CASSETTE FOR EMBEDDING BIOLOGICAL TISSUES**
KASSETTE ZUM EINBETTEN BIOLOGISCHER GEWEBEPROBEN
BOITIER D'INCLUSION DE TISSUS BIOLOGIQUES

(30) Priority: 08.10.2002 HU 0203397; 08.07.2003 HU 0302132
(43) Date of publication of application: 31.08.2005
(60) Divisional application: 06075702.8
(73) Proprietor: Glasz, Tibor, 1027 Budapest (HU)
(72) Inventor: Glasz, Tibor, 1027 Budapest (HU)
(74) Representative: Varnai, Aniko
(86) International application number: PCT/HU2003/000076
(87) International publication number: WO 2004/033307

(56) References cited:
- EP-A- 0 856 729
- US-A- 4 034 884
- US-A- 4 220 252
- US-A- 4 421 246
- US-A- 4 576 796
- US-A- 5 089 288
- US-A- 5 354 370
- US-A- 5 457 050

## Description

The object of the invention is a cassette for embedding biological tissues.

A great number of tissue samples of patients are examined for fine structure by laboratories specialised for this work mostly with optical microscope in the practice. The tissue samples are put into cassettes usually made of plastic to avoid confusing.

The closed cassettes are marked with identification numbers and the tissue samples are treated with chemical reagents of predetermined composition, when the characteristics of the tissue change in a predetermined way.

The cassettes are then dipped into an embedding medium (mostly into paraffin) to embed the tissue samples.

The tissue samples are embedded within the hardened embedding medium in this way.

The first function of the embedding medium is to make the tissue sample suitable for preparing sections from it. The second function of the medium is to keep the consistence and characteristics of the tissue sample for a long period of time making the tissue sample suitable to be kept in archives.

The tissue section is made in such a way that the embedding medium with the tissue sample therein is fastened in the vice of a cutting device the so-called microtom and film-like sections are made, which are mounted on the slide and they are suitable for histological examination with optical microscope.

The United States patent description of registration number 4 220 252 describes a cassette for embedding. The cassette consists of a lower part and an upper cover, which have different shapes. This cassette has not any component, which can be used again after the embedding operation.

Another disadvantage of this known embedding cassette is that it can be used only in manual embedding procedures.

The USP 5 968 436 describes a cassette of another design and a procedure for embedding. The cassette has the same disadvantage as the previous one, the procedure has the disadvantage that it can be carried out only manually. It cannot be automated anyway.

USP 5 457 050 describes an apparatus, which is a chamber for embedding of DNA molecule in agarose. The chamber has two identical halves and at least one retainer sheet, which defines the molding space within the chamber. The retainer is removable after agarose placed in the apparatus has solidified.

This apparatus is not suitable for embedding of biological tissues in such a medium as wax or paraffin. Further disadvantage of the above apparatus is the following: the casting process can be carried out only manually and this apparatus has not any component, which can be used again after the embedding operation.

USP 4 034 884 describes a container apparatus for processing biological specimens. The container has a perforated box-like bottom member and a perforated box-like cover member telescopically fitted.

USP 5 354 370 discribes a tissue processor.

This apparatus is applicable for the treatment of biological tissues, but it may not use for the embedding of the tissues.

The characteristic features of the cassette are as follows: each half of cassette is provided with side panels of the frame overhang the perforated panel upwards and downwards, - at each half of cassette - the outside front of one of the side panels of frame is a surface including acute angle with the edge of the perforated panel and they are positioned to face each other, serving a V-form and one of the halves of cassette is provided with a closing element, which can be inserted and which is provided with a stepped flange.

It is advantageous that inlet openings are formed on one of the side panels, but this shaping is not necessary, because the openings of the perforated panel can be used as inlet openings, as well.

Another object of the invention is a cassette construction applicable for embedding biological tissues, which comprises two differently shaped oppositely positioned halves of cassette, which can be joined, each half of cassette is provided with a perforated panel, with a side panel of frame joined to the perforated panel and overhanging it only in one direction and the upper half of cassette is provided with a fitting claw joined to the side panel of frame and optionally with inlet openings which are shaped in one of side panels of frame. The characteristic features of the cassette are the following: the lower half of cassette is provided with a fitting bed for receiving the fitting claw shaped in the side panel of frame,
the fitting bed is positioned on a side panel of frame so, that the slot of the fitting bed is opened towards the perforated panel and in that - at each half of cassette -
the outside front of one of the side panels of frame forms a surface including acute angle with the edge of the perforated panel and they are positioned to face each other serving a V-form and the two halves of cassette are joined so, that a cavity formed by the side panels of frame of the upper half of cassette is closed by the perforated panel of the lower half of cassette.

We can use the cassettes of the invention in an apparatus for embedding biological tissue samples.
Figure 1 shows the axonometric view of the cassette where the tissue holding cassette comprises two identically shaped halves of cassette.
Figure 2 shows the top view of the half of the above tissue holding cassette.
Figures 3 and 4 show side views of the half of above tissue holding cassette.
Figure 5 shows side view of the closing element used in the above tissue holding cassette.

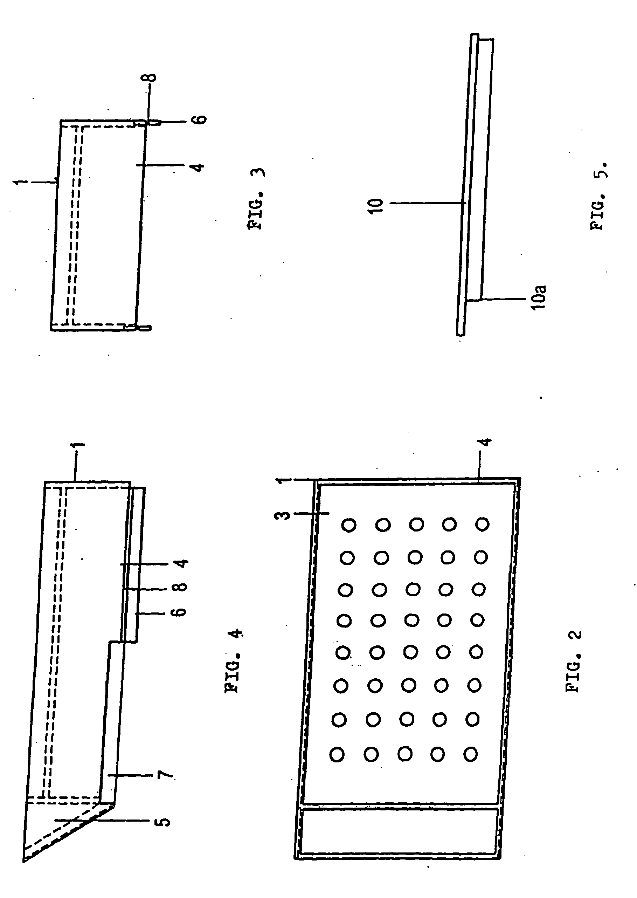

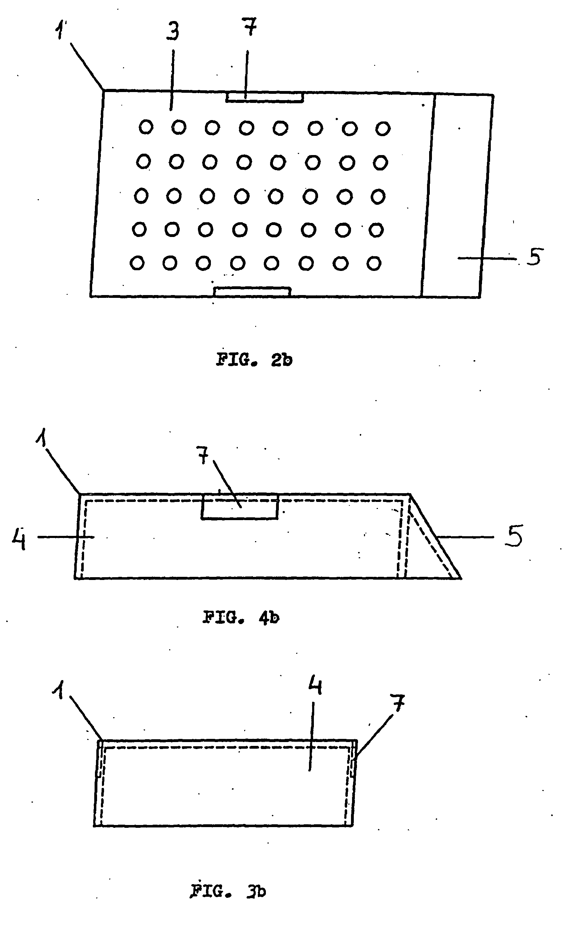

Figure 2b shows the top view of the lower half of the tissue holding cassette according to the embodiment of Claim 2, Figure 3b shows its rear view and Figure 4b shows its side view.
Figure 2c shows the top view of the upper half of the tissue holding cassette which has two differently shaped halves of cassette.

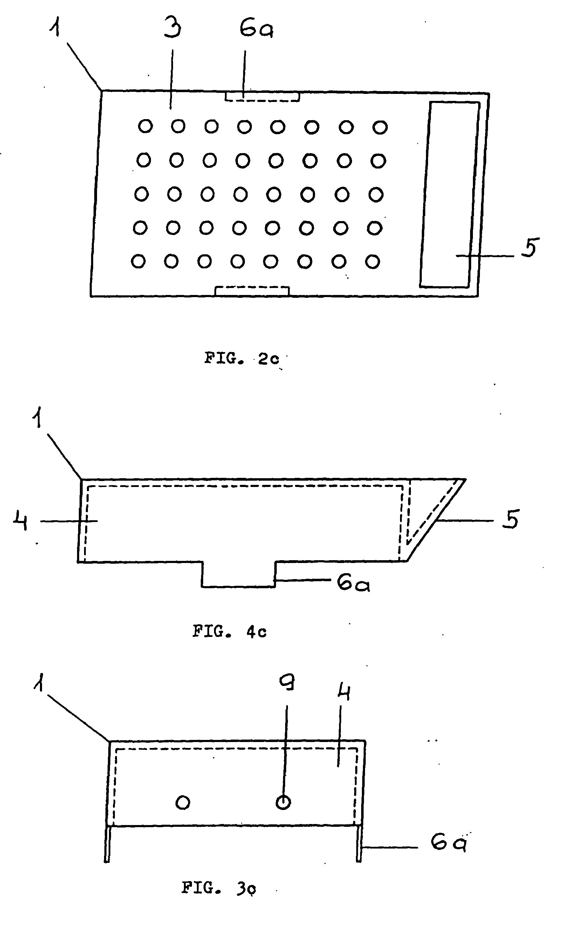

Figure 3c shows its rear view and Figure 4c shows its side view.

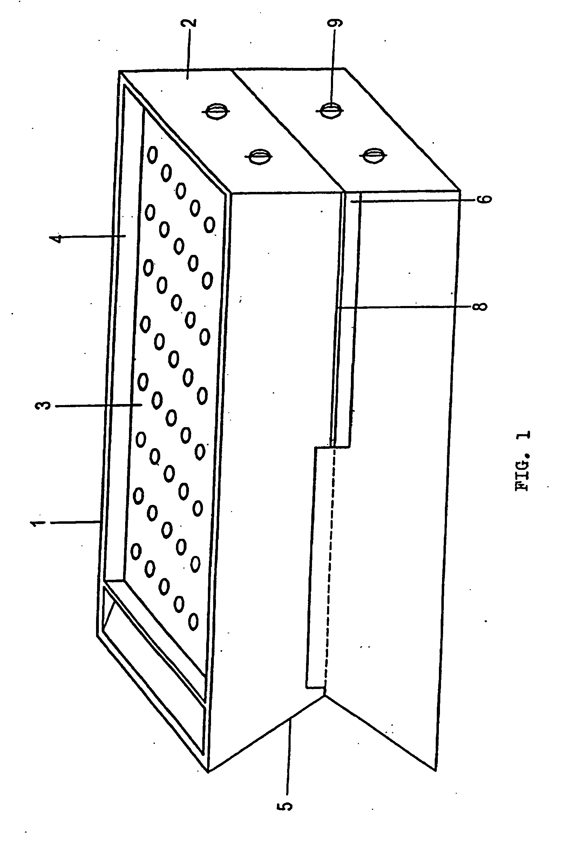

Figure 1 shows axonometric view of the tissue holding cassette 2 consisting of two identically shaped halves of cassette 1.

It seems from the Figure 1 that the tissue sample holding cassette 2 is built up by turning two halves of cassette 1 oppositely to each other.

Both halves of cassette 1 are provided with a perforated panel 3 and a side panel of frame 4, which fit to it.

The side panel of frame 4 overhangs the perforated panel 3 upwards and downwards.

A fitting rib 6 is joined to the side panel of frame 4 and forms steps with the fitting bed 7 shaped on the flange of the side panel of frame 4.

The steps formed by the fitting rib 6 and the fitting bed 7 are shaped oppositely on the two halves of cassette 1.

The inside front surfaces of the side panels of frame 4 include rectangle with the edge of the perforated panel 3.

The inside front surfaces of three side panels of frame 4 include rectangle with edges of the perforated panel 3 but the outside front surface of one of the side panels of frame 4 includes an acute angle with the edge of the perforated panel 3.

An inlet opening 9 is shaped in the one of side panels of frame 4.

Another embodiment can be constructed according to invention, wherein no separate inlet openings 9 are shaped but the tissue embedding medium is poured in through openings of the perforated panel 3.

The half of cassette 1 is provided with a perforated panel 3 and side panels of frame 4, which fit to and overhang the perforated panel 3 only in one direction.

A fitting bed 7 is shaped on the side panel of frame 4, which receives a fitting claw 6a shaped on the half of cassette 1 serving as upper part.

The outside front surface of one of side panels of frame 4 is connected with a surface including acute angle 5 with the edge of the perforated panel 3.

Figure 3b shows the side panel of frame 4 of the half of cassette 1 according to an embodiment serving as lower part and the fitting bed 7 shaped thereon.

Figure 4b shows the side panel of frame 4 of the half of cassette 1 according to an embodiment serving as lower part, the fitting bed 7 shaped thereon and the surface including acute angle 5 connected to the edge of the perforated panel 3.

Figure 2c shows the upper half of cassette 1 according to an embodiment, which is provided with a perforated panel 3 and a side panel of frame 4 connected to the perforated panel 3 and overhanging it only in one direction.

The side panel of frame 4 is provided with a fitting claw 6a and the outside surface of one of side panels of frame 4 forms a surface including acute angle 5 with the edge of the perforated panel 3.

Figure 3c shows the rear view of the mentioned upper half of cassette 1, the side panel of frame 4 thereof is provided with inlet openings 9.

The scope of invention includes also an embodiment, wherein no inlet opening 9 is shaped in the side panel of frame 4 but the openings of the perforated panel 3 serve as inlet openings.

Figure 4c shows the side view of the upper half of cassette 1 where the side panel of frame 4 is provided with a fitting claw 6a and the front surface of the side panel 4 forms the surface including acute angle 5 with the edge of the perforated panel.

The advantages of the cassettes according to the invention are as follows.

The cassettes are applicable for an automated casting procedure.

The usage of the cassettes makes the casting procedure faster and safer.

One half of cassette can be re-used in a new casting procedure.

The special construction of the cassettes makes unnecessary the opening of cassettes before casting.

The usage of these cassettes in the casting procedure makes possible to cast any number of cassettes simultaneously.

### LIST OF REFERENCES

- 1: half of cassette
- 2: tissue holding cassette
- 3: perforated panel
- 4: side panel of frame
- 5: surface including acute angle
- 6: fitting rib
- 6a: fitting claw
- 7: fitting bed
- 8: groove
- 9: inlet opening
- 10: closing element
- 10a: stepped flange

## Claims

1. A cassette applicable for embedding biological tissues, which comprises two identically shaped halves of cassette (1) positioned oppositely and each half of cassette (1) is provided with a perforated panel (3) and with side panels of frame (4), which are joined to the perforated panel (3) and with a fitting rib (6) joined to a side panel of frame (4), the perforated panels (3) are oppositely positioned on the two halves of cassette (1) and a fitting bed (7) forming steps with the fitting rib (6) are oppositely shaped on the two oppositely positioned side panels of frame (4) and optionally inlet openings (9) are shaped on one of the side panels of frame (4) **characterised in that** each half of cassette (1) is provided with side panels of the frame (4) overhang the perforated panel (3) upwards and downwards, - at each half of cassette (1) - the outside front of one of the side panels of frame (4) forms a surface including acute angle (5) with the edge of the perforated panel (3) and they are positioned to face each other, serving a V-form and one of the halves of cassette (1) is provided with a closing element (10), which can be inserted and which is provided with a stepped flange (10a).

2. A cassette applicable for embedding biological tissues, which comprises two differently shaped oppositely positioned halves of cassette (1), which can be joined, each half of cassette (1) is provided with a perforated panel (3), with a side panel of frame (4) joined to a perforated panel (3) and overhanging it only in one direction and the upper half of cassette (1) is provided with a fitting claw (6a) joined to the side panel of frame (4), optionally with inlet openings (9) which are shaped in one of side panels of frame (4), **characterised in that** the lower half of cassette (1) is provided with a fitting bed (7) for receiving the fitting claw (6a) shaped in the side panel of frame (4) the fitting bed (7) is positioned on the side panel of frame (4) so, that the slot of the fitting bed (7) is opened towards the perforated panel (3) and **in that** -at each half of the cassette- the outside front of one of the side panels of frame (4) forms a surface including acute angle (5) with the edge of the perforated panel (3) and they are positioned to face each other serving a V-form and the two halves of cassette (1) are joined so.

## Patentansprüche

1. Eine Kassette zum Einbetten biologischer Gewebeproben, die aus zwei identisch ausgeformten Kassettenhälften (1) besteht, die gegenüber einander positioniert sind und jede Kassettenhälfte (1) ist mit einer perforierten Platte (3) und mit der perforierten Platte (3) verbundenen Seitenwänden des Rahmens (4) versehen, die perforierten Platten (3) sind gegenüber einander positioniert in den beiden Kassettenhälften (1) und ein mit der Anpassungsrippe (6) Stufen bildendes Anpassungsbett (7) und wahlweise Einpassöffnungen (9) sind auf den zwei gegenüberliegenden Seitenwänden des Rahmens (4) ausgeformt, damit **gekennzeichnet**, dass jede Kassettenhälfte (1) mit Seitenwänden des Rahmens (4) versehen sind, die von der perforierten Platte (3) in jeden Kassettenhälfte (1) nach oben und nach unten überhangen und die äußere Seite einer der Seitenwände des Rahmens (4) mit dem Rand der perforierten Platte (3) eine den scharfen Winkel einschließende Oberfläche (5) bildet, sie gegenüber einander positioniert sind, um eine Form des V zu bilden und eine der Kassettenhälften (1) mit einem Sperrelement (10) versehen ist, das eingesetzt werden kann und das mit einem stufigen Bord (10a) versehen ist.

2. Eine Kassette zum Einbetten biologischer Gewebeproben, die aus zwei different ausgeformten Kassettenhälften (1) besteht, die gegenüber einander positioniert verbunden werden können, jede Kassettenhälfte (1) ist mit einer perforierten Platte (3) und mit damit verbundenen Seitenwänden des Rahmens (4) versehen, die nur in eine Direktion davon überhangen, und die obere Kassettenhälfte (1) ist mit einer Seitenwand des Rahmens (4) verbundenen Passteil (6a) und wahlweise mit in einer der Seitenwände des Rahmens (4) ausgeformten Einpassöffnung (9) versehen, damit **gekennzeichnet**, dass die untere Kassettenhälfte (1) mit einem in der Seitenwand des Rahmens (4) ausgeformten Anpassungsbett (7) zur Einnahme des Passteils (6a) versehen ist, das Anpassungsbett (7) in der Seitenwand des Rahmens auf die Weise positioniert ist, dass der Schlitz des Anpassungsbettes (7) nach der perforierten Panel (3) geöffnet ist, und die äußere Seite einer der Seitenwände des Rahmens(4) mit dem Rand der perforierten Platte (3) eine den scharfen Winkel einschließende Oberfläche (5) in jeder Kassettenhälfte (1) bildet, und sie gegenüber einander positioniert sind um eine Form des V zu bilden und die beide Kassettenhälften (1) auf diese Weise zusammengebunden sind.

## Revendications

1. Un boîtier applicable à inclure tissus biologiques qui se compose des deux moitiés de boîtier (1) ayantes la forme identique et placées une opposément à l'outre et chacune moitié de boîtier (1) est équipée d'un tableau perforé (3) et tableaux latéraux de cadre (4) étant joints au tableau perforé (3) et à une ailette d'ajustement (6) jointe à un tableau latéral de cadre (4) et les tableaux perforés (3) are posés opposément dans les deux moitiés de boîtier (1) et une couche d'ajustement (7) qui constitue marches avec l'ailette d'ajustement et qui sont formées opposément dans les deux tableaux latéraux de cadre (4) et ouvertures de réception (9) sont facultativement formées dans un des tableaux latéraux de cadre (4) **caractérisée par** que chacune moitié de boîtier (1) est équipée des tableaux latéraux de cadre (4) qui s'étendent du tableau perforé (3) vers le haut et le bas dans chacune moitié de boîtier (1) et une façade extérieure d'une des tableaux latéraux de cadre (4) constitue une surface de l'angle aigu (5) avec le bord du tableau perforé (3) et ils sont posés en face l'un avec l'autre constituant une forme de V et une des moitiés de boîtier (1) est equipée par un élément de fermeture (10) qui peut être inséré et qui est équipé d'un rebord avec marche (10a).

2. Une boîtier applicable à inclure tissus biologiques qui se compose des deux moitiés de boîtier (1) formées différemment et placées une opposément à l'autre qui peut être jointes, chacune moitié de boîtier (1) est équipée d'un tableau perforé (3) et d'un tableau latéral de cadre (4) qui est joint au tableau perforé (3) et qui s'étend de celui-ci seulement dans une direction et la moitié supérieure de boîtier (1) est equipée des languettes d'ajustement (6a) jointes aux tableaux latéraux de cadre (4) alternativement avec ouvertures de réception (9) formées dans quelqu'unes des tableaux latéraux de cadre (4) **caractérisée par** que la moitié inférieure de boîtier (1) est équipée d'une couche d'ajustement (7) pour recevoir une languette d'ajustement (6a) formée dans le tableau latéral de cadre (4) la couche d'ajustement (7) est placée sur le tableau latéral de cadre (4) de manière que la fente dans la couche d'ajustement (7) est ouverte vers le tableau perforé (3) et de la manière que la surface extérieure d'un des tableaux latéraux de cadre (4) constitue une surface de l'angle aigu (5) avec le bord du tableau perforé (3) et ces surfaces are posées en face l'un avec l'autre constituant une forme de V et les deux moitiés de boîtier (1) sont jointes de cette manière.
